# EUROPÄISCHE PATENTSCHRIFT

(11) **EP 1 946 483 B1**
(45) Veröffentlichungstag und Bekanntmachung des Hinweises auf die Patenterteilung: **06.01.2010**
(21) Anmeldenummer: 06818363.1
(22) Anmeldetag: 03.11.2006
(51) Int. Cl.: H04L 12/10, H04L 12/40

(54) **VERBRAUCHSWERTERFASSUNGSSYSTEM UND VERFAHREN ZUM BETREIBEN EINES VERBRAUCHSWERTERFASSUNGSSYSTEMS**
CONSUMPTION VALUE DETECTION SYSTEM AND METHOD FOR OPERATING A CONSUMPTION VALUE DETECTION SYSTEM
SYSTÈME D ACQUISITION DE VALEUR DE CONSOMMATION ET PROCÉDÉ D UTILISATION D UN SYSTÈME D ACQUISITION DE VALEUR DE CONSOMMATION

(30) Priorität: 09.11.2005 DE 102005053439
(43) Veröffentlichungstag der Anmeldung: 23.07.2008
(73) Patentinhaber: Techem Energy Services GmbH, 65760 Eschborn (DE)
(72) Erfinder: GUTMANN, Norbert, 64295 Darmstadt (DE)
(74) Vertreter: KEIL & SCHAAFHAUSEN Patentanwälte
(86) Internationale Anmeldenummer: PCT/EP2006/010559
(87) Internationale Veröffentlichungsnummer: WO 2007/054239

(56) Entgegenhaltungen:
- KRIESEL W ET AL: "ASI IM UEBERBLICK" AKTUATOR SENSOR INTERFACE FUER DIE AUTOMATION, 1994, Seiten 11-60, XP002062938

## Beschreibung

Die Erfindung betrifft ein Verbrauchswerterfassungssystem gemäß dem Oberbegriff des Anspruchs 1 mit mehreren Sensoren und einer Messzentrale, welche über Leitungen miteinander verbunden sind, wobei zwischen der Messzentrale und einem Sensor ein Sensorinterface zwischengeschaltet ist, welches mindestens einen Sensor ansteuert. Ferner ist die Erfindung auf ein Verfahren zum Betreiben dieses Verbrauchswerterfassungssystems gemäß dem Oberbegriff des Anspruchs 8 gerichtet.

Die Messung des Heizenergieverbrauches ermöglichst eine gerechte Aufteilung der Energiekosten entsprechend der verbrauchten Energie und ist für Liegenschaften mit mehreren Wohnungen seit Jahren gesetzliche Vorschrift. Mit dem daraus erwachsenden Bewusstsein des Verbrauchers für die Kosten der Ressource "Energie" ergibt sich ein erheblicher Energieeinspareffekt. Um eine gerechte Aufteilung der Heizkosten entsprechend dem tatsächlichen Heizenergieverbrauch zu erreichen, ist jedoch ein erheblicher Messaufwand notwendig, da die von jedem Heizkörper abgegebene Wärmemenge erfasst werden muss. Die hierzu seit Jahren bekannten Verdunstungsröhrchen können den gestiegenen Anforderungen an die Genauigkeit und den Ablesekomfort jedoch nicht mehr genügen, weil die Ablesegenauigkeit bei den Verdunstungsröhrchen insbesondere beim Einsatz in Niedertemperaturanlagen zu gering ist. Moderne elektronische Messgeräte genügen den erhöhten messtechnischen Anforderungen. Jedoch muss ein Ableser noch zu jeder Messstelle in jeder Wohnung einer Liegenschaft kommen, um den jeweiligen Verbrauchswert für die Erstellung einer Heizkostenabrechnung aufzunehmen.

Daher sind verschiedene Messanordnungen bekannt, bei denen die Messgeräte über eine digitale Verbindung mit einer Datenzentrale kommunizieren. Diese Verbindung kann drahtgebundenen oder über Funk realisiert sein.

Die Messgeräte erfassen als physikalische Messgröße insbesondere die Temperatur und wandeln das Messergebnis des entsprechenden Sensors über einen Analog-Digital-Wandler in ein digitales Messergebnis um. Um die notwendige Genauigkeit zu erreichen, müssen die einzelnen Sensoren der Messanordnung abgeglichen werden. Dies kann in Form eines analogen Abgleichs geschehen, bei dem zu dem analogen Messsignal ein in der Fertigung einstellbarer Korrekturwert addiert wird. Meistens werden jedoch digitale Abgleichwerte ermittelt, welche die Messgeräte über ihre gesamte Lebensdauer speichern. Diese Abgleichwerte fließen als Rechenstützpunkte an geeigneter Stelle in die Ermittlung der physikalischen Messgröße ein. Die Messgeräte selbst besitzen in der Regel eine Anzeige für den so ermittelten Verbrauchswert. Dies erfordert, dass die vollständige Elektronik zur Erfassung der Verbrauchswerte in jedem Messgerät, d. h. an jeder Messstelle, vorzusehen ist.

Weiterhin müssen die Messgeräte einen ordnungsgemäßen Betrieb organisieren. Dies wird auf Grundlage einer in den Messgeräten vorgesehenen Zeitbasis realisiert, damit regelmäßig Messungen durchgeführt und die Verbrauchswerte entsprechend gespeichert werden. Für einen geregelten Datentransfer werden zusätzlich Adressen vergeben und in den Messgeräten gespeichert. Neben einer vergleichsweise aufwändigen und teuren Elektronik in jedem Messgerät ist es also zusätzlich nötig, den Messgeräten eine Dauerenergieversorgung zu geben. Dies wird meistens durch eine Langzeitbatterie gelöst, die jedoch von Zeit zu Zeit durch einen Wartungsservice getauscht werden muss. Alternativ können auch Lebensdauerbatterien eingesetzt werden, die jedoch sehr teuer sind und, weil sie in jedem Messgerät vorzusehen sind, das Gesamtsystem entsprechend verteuern.

Aus der DE 33 30 941 A1 ist eine Schaltungsanordnung zum Erfassen und Anzeigen der von Heizkörpern in Wohnungen eines Hauses abgegebenen Wärmemenge bekannt, welche mit temperaturabhängigen Widerständen als Temperatursensoren und einer Auswerteschaltung in einer Zentrale ausgestattet ist, wobei die temperaturabhängigen Widerstände aus einer in der Zentrale vorgesehenen Konstantstromquelle gespeist werden und eine sequentielle Aufschaltung der Konstantstromquelle durch einen Mikroprozessor in der Zentrale gesteuert wird. Dazu wird die Konstantstromquelle den einzelnen Widerständen durch einen sequentiell schaltenden Schalter aufgeschaltet. Diese Schaltungsanordnung ist jedoch sehr unflexibel, da nur eine bestimmte Anzahl von Heizkörpersensoren versorgt werden kann, die in einer fest vorgegebenen Reihenfolge abzufragen sind. Außerdem wird das auszuwertende Messsignal durch viele Schalter und über sehr lange Wege bis zu der Messzentrale geleitet, wodurch Messfehler entstehen können und sich Möglichkeiten zur Manipulation bieten.

Der Veröffentlichung W. Kriesel et. al., "ASI im Überblick", Aktuator Sensor Interface für die Automation, 1994, Seiten 11 bis 60, ist ein ASI-System für den Informationsaustausch von Sensoren und Aktuatoren mit einer Steuerung zu entnehmen. Kernstück des ASI ist ein Slave-Chip, mit dem die Sensoren/Aktuatoren an die ASI-Leitung digital und zugleich kostengünstig angekoppelt werden. In jedem Abfragezyklus werden Informationen vom Muster zu jedem Slave und zurück seriell übertragen. Die ASI-Leitung ist im Allgemeinen ein ungeschirmtes Zwei-Leiter-Kabel, über das gleichzeitig Signale und Energie übertragen werden. Die Adressen der einzelnen Slaves sind in einem nicht flüchtigen Speicher aus Sicherheitsgründen doppelt abgelegt, wobei eine automatische Adressierung in dem Slave dahingehend vorgesehen ist, dass sie nach Prüfroutinen vom Muster durchgeführt wird.

Aufgabe der Erfindung ist es daher, eine zentrale Verbrauchswerterfassung vorzuschlagen, die mit einem besonders kostengünstigen System durchführbar ist und grundsätzlich wartungsfrei betrieben werden kann. Gleichzeitig soll das System eine hohe Messgenauigkeit aufweisen und einfach um neue Zusatzkomponenten erweiterbar sein.

Diese Aufgabe wird erfindungsgemäß durch ein Verbrauchswerterfassungssystem mit den Merkmalen des Anspruchs 1 gelöst. Dabei ist vorgesehen, dass die Leitungen zwischen der Messzentrale und dem mindestens einen Sensorinterface, welches mit einem oder mehreren Sensoren verbunden ist, einen vorzugsweise parallelen Bus bilden, wobei der Bus inkrementelle Adressierpulse zum Ansprechen eines Sensorinterfaces von der Messzentrale und Pulse zum Senden digitaler Informationen von einem Sensorinterface an die Messzentrale aufweist. In einem parallelen Bus sind die angeschlossenen Sensorinterfaces parallel geschaltet. Ferner bildet der Bus eine Spannungs- bzw. Energieversorgung für ein Sensorinterface und daran angeschlossene Sensoren. Die Abspeichereinheit weist mehrere, einzeln aktivierbare Widerstände auf, indem die Widerstände überbrückt sind und jede Überbrückung einzeln trennbar ist.

Durch den Bus ist eine digitale Kommunikation zwischen einem Sensorinterface und der Messzentrale möglich, wobei ein bzw. jedes Sensorinterface und daran angeschlossene Sensoren durch den leitungsgebundenen Bus mit Energie versorgt werden können. Eine derartige Kommunikation zwischen den Sensoren bzw. Sensorinterfaces und der Messzentrale ist wesentlich zuverlässiger als das Herstellen einer sehr langen Messverbindung zwischen der Messzentrale und dem Sensor. Gleichzeitig kann das Sensorinterface mit den daran angeschlossenen Sensoren von der Messzentrale aus mit der erforderlichen Energie versorgt werden, so dass das Sensorinterface und die Sensoren keine separate Energieversorgung benötigen. Daher ist dieses System grundsätzlich wartungsfrei. Ein entscheidender Vorteil des erfindungsgemäßen Systems liegt auch in der Zwischenschaltung eines Sensorinterfaces zwischen die Messzentrale und den Messsensor. Hierdurch werden zum einen die Messstrecken zu den an das Sensorinterface angeschlossenen Sensoren im Vergleich zu einer Messstrecke zu der Zentrale erheblich verkürzt. Zum anderen kann ein Sensorinterface, welches innerhalb des Verbrauchswerterfassungssystems eine eindeutig zugeordnete Adresse aufweist, von der Messzentrale über den Bus angesprochen werden, so dass das System durch Einbinden neuer Sensorinterfaces gleichzeitig flexibel erweiterbar ist.

Dieses System lässt sich besonders einfach realisieren, wenn die inkrementellen Adressierpulse Niedrig-Spannungspulse in einer an dem Bus anliegenden hohen Spannung sind. Durch eine während des Messbetriebs an dem Bus grundsätzlich anliegende Spannung ist es möglich, die an den Bus angeschlossenen Sensorinterfaces mit den verbundenen Sensoren mit der notwendigen Betriebsspannung zu versorgen. Während des Anliegens dieser Betriebsspannung ist der Bus - abgesehen von der Aufladung möglicher kapazitiver Elemente in den Sensorinterfaces und/oder von durchzuführenden Initialisierungen - im Wesentlichen stromfrei, d.h. es fließt allenfalls ein sehr niedriger Ruhestrom vorzugsweise in der Größenordnung weniger µA. Daher ist der Energieverbrauch für den Grundbetrieb des Busses während des Messbetriebs nur klein. Erfindungsgemäß können die Pulse von der Messzentrale an ein Sensorinterface, insbesondere also die Adressierpulse, als Niedrig-Spannungspulse ausgebildet sein, welche die ansonsten konstant anliegende Versorgungsspannung für kurze Zeit unterbrechen und so in den angesprochenen Sensorinterfaces einfach nachweisbar sind.

Entsprechend dem Konzept der vorliegenden Erfindung sind die Adressierpulse als inkrementelle Adressierpulse ausgebildet, um das Protokoll des vorgesehenen Busses zur Verbindung der Messzentrale und der Sensorinterfaces möglichst einfach aufzubauen. Inkrementelle Adressierpulse bedeuten, dass in jedem angeschlossenen Sensorinterface die von der Messzentrale ausgesendeten Adressierpulse gezählt werden. Sobald die Anzahl der gezählten Adressierpulse mit einer in dem Sensorinterface hinterlegten Adresse übereinstimmt, wird das Sensorinterface aktiv und führt die dieser Adresse zugeordnete Aufgabe aus, bspw. das Messen des Widerstandswerts eines angeschlossenen Sensors. Dabei kann das Zählen der Adressierpulse unmittelbar nach einem Reset beginnen, der erfindungsgemäß durch ein langes Abschalten der am Bus anliegenden Spannung, bspw. mindestens für eine Größenordnung von 10s, erfolgen kann. Es ist jedoch auch möglich, nach einem Reset innerhalb eines vorgebbaren Zeitraums nach Anlegen der Spannung zunächst Sonderpulse zur Steuerung des Verbrauchswerterfassungssystems vorzusehen und erst nach diesem Zeitraum mit dem Zählen der Adressierpulse zu beginnen.

Um eine reibungslose Abwicklung innerhalb des Busprotokolls zu ermöglichen, kann erfindungsgemäß vorgesehen werden, dass der zeitliche Abstand zwisehen zwei Adressierpulsen so lang ausgebildet ist, dass ein durch den jeweiligen, inkrementellen Adressierpuls angesprochenes Sensorinterface die angeforderten Aufgaben ausführt und die entsprechenden digitalen Informationen an die Messzentrale sendet, bevor die Messzentrale einen neuen, inkrementellen Adressierpuls aussendet und damit das Sensorinterface mit der nachfolgenden Adresse anspricht. Eine sicherere Kommunikation kann erfindungsgemäß dadurch erreicht werden, dass in einem von einem Sensorinterface an die Messzentrale ausgesendeten Informationsdatenblock (Telegramm) eine Quittiermeldung vorgesehen ist, welche insbesondere die angesprochene Adresse enthält. Erst nach Erhalt einer solchen Quittiermeldung und/oder einem entsprechend langen Timeout bei einem Fehler wird der nächste Adressierpuls ausgesendet.

Ferner kann erfindungsgemäß vorgesehen werden, dass die Pulse zum Senden digitaler Informationen von den Sensorinterfaces innerhalb des Verbrauchserfassungssystems zu der Messzentrale Strompulse sind, die auf einem ansonsten im Wesentlichen stromfreien Bus ausgesendet werden und in der Messzentrale einfach nachweisbar sind. Die Strompulse können eine Amplitude in der Größenordnung mA aufweisen und mit einer Übertragungsrate einiger hundert Baud realisiert sein. Nach Erhalt einer Antwort von einem Sensorinterface werden erfindungsgemäß der nächste Adressierpuls ausgesendet und die Antwort hierauf abgewartet, bis die Messwerte aller Sensorinterfaces erfasst sind. Danach wird die Spannung am Bus abgeschaltet, bis der nächste Messzyklus beginnen soll. Dadurch wird gleichzeitig ein Reset des Verbrauchswerterfassungssystem erreicht.

Vorzugsweise weist das Sensorinterface eine Steuerung zur Durchführung einer Messung mit einem angesprochen Sensor auf. Dadurch wird lediglich der für das Durchführen einer konkreten Messung benötigte Anteil an elektronischen Bauteilen in ein Sensorinterface integriert, welches gleichzeitig auch mehrere angeschlossene Sensoren verwalten kann. Im Vergleich zu dem bekannten Stand der Technik ist der elektronische Aufwand für derartige Sensorinterfaces klein, da die Spannungsversorgung gebündelt von der Messzentrale aus erfolgt, die auch wesentliche Steuerungsfunktionen mit übernehmen kann. Das Sensorinterface muss lediglich in der Lage sein, den Messsensor mit der ihm von der Messzentrale über den Bus zur Verfügung gestellten Spannung zu messen und das Messergebnis zu digitalisieren, um es über den Bus an die Messzentrale zu senden. Hierfür sind einfache, handelsübliche Mikrocontroller als Steuerung ausreichend.

Erfindungsgemäß kann in einem Sensorinterface auch eine spannungsversorgungsfreie Abspeichereinheit vorgesehen sein. In dieser Abspeichereinheit können Abgleichwerte für die Sensoren gespeichert werden, die dann bei jeder durch das Sensorinterface durchgeführten Messung mit einem Sensor zur Verfügung stehen. Diese Abgleichwerte hängen im Wesentlichen von dem verwendeten Sensor ab, so dass sie bei einer Installation eines Sensors an einem Sensorinterface werksseitig vorgegeben werden können. Alternativ wäre es erfindungsgemäß ebenso möglich, die Abgleichwerte in einer mit dem Sensor selbst verbundenen spannungsversorgungsfreien Abspeichereinheit unterzubringen. In diesem Fall ist eine feste Paarung zwischen Sensor und Sensorinterface nicht notwendig.

Die Abspeichereinheit weist mehrere, einzeln aktivierbare Bauteile auf und kann insbesondere in Form einer Reihenschaltung von einzeln überbrückbaren Widerständen aufgebaut sein, wobei jede Überbrückung einzeln trennbar ist. Die Widerstandswerte der nacheinander in Reihe geschalteten Widerstände verdoppelt sich vorzugsweise von einem Widerstand zum nächsten. Auf diese Weise können durch Auftrennung einzelner Überbrückungen auf einfache Weise digitale Werte in Form eines detektierbaren Spannungsfalls vorgegeben werden. Damit kann der Abspeichereinheit ein Datenwert durch Trennen von Verbindungen auf einer Platine, insbesondere mittels Strompulsen und/oder Sollbruchstellen, vorgebbar sein, so dass die Abspeichereinheit auch während der Installation des Verbrauchswerterfassungssystems einfach mit vorgegebenen Datenwerten versehen werden kann, bspw. einer Adresse im Bussystem. Daher ist die erfindungsgemäße spannungsversorgungsfreie Abspeichereinheit auch besonders geeignet, um den einzelnen Sensorinterfaces und/oder einzelnen Kanälen des Sensorinterfaces, an welche Sensoren angeschlossen sind, mit entsprechenden Adressen zu versehen, die durch Adressierpulse von der Messzentrale ansprechbar sind.

Um die in der Abspeichereinheit eines Sensorinterfaces und/oder eines Sensors abgespeicherten Daten abrufen zu können, können diese bspw. durch Sonderpulse oder einen besonderen Adressbereich von der Messzentrale abrufbar sein.

Erfindungsgemäß kann ein Sensor mit in das Sensorinterface integriert sein, so dass Sensorinterface und Sensor eine Einheit bilden. Natürlich ist es auch möglich, mehrere Sensoren an ein Sensorinterface anzuschließen und/oder mehrere Sensorinterfaces, ggf. mit jeweils mehreren Sensoren, in dem Verbrauchserfassungssystem vorzusehen. In diesem Fall können einem Sensorinterface mehrere Adressen zugeordnet werden, jeweils eine für einen angeschlossenen Sensor. Dadurch ist eine Sub-Adressierung der an ein Sensorinterface angeschlossenen Sensoren möglich, so dass auch diese gezielt von der Messzentrale angesprochen werden können.

Um die Kosten für die Sensoren so gering wie möglich zu halten, ist ein bevorzugter Sensor des Verbrauchswerterfassungssystems ein analoger Sensor, dessen analoges Messsignal in einem Analog-Digital-Wandler in dem Sensorinterface digitalisiert wird. Dabei kann der Sensor insbesondere ein Widerstandssensor sein, der für die Erfassung von Temperaturen besonders geeignet ist. Dieser Widerstandssensor ändert seinen Widerstand in Abhängigkeit der Temperatur, so dass bspw. der Spannungsabfall über diesen Widerstand bei einem konstanten Strom ein Maß für die Temperatur ist.

Die vorliegende Erfindung bezieht sich auch auf ein Verfahren zum Betreiben des erfindungsgemäßen Verbrauchswerterfassungssystems gemäß dem Oberbegriff des Anspruchs 8 mit mehreren Sensoren, einer Messzentrale und mindestens einem Sensorinterface, wobei zumindest die Messzentrale und das Sensorinterface über einen Bus bildende Leitungen miteinander verbunden sind. Die Messzentrale adressiert das Sensorinterface über den Bus mittels inkrementeller Adressierpulse, und das Sensorinterface übermittelt Informationen in digitaler Form über den Bus mittels Pulsen zu der Messzentrale, wobei ein Sensorinterface und daran angeschlossene Sensoren insbesondere über den Bus mit Spannung versorgt werden. Damit kann in dem Bussystem ein einfaches Busprotokoll eingesetzt werden, das nur einen geringen elektronischen Aufwand erfordert und mit wenig Energie betrieben werden kann. Die Adresse des Sensorfaces und/oder einzelner Kanäle des Sensorinterfaces in der spannungsversorgungsfreien Abspeichereinheit werden eingestellt, indem einzelne Überbrückungen von in der Abspeichereinheit vorgesehenen Widerständen aufgetrennt und über einen detektierbaren Spannungsabfall so digitale Werte vorgegeben werden.

Dazu ist es besonders vorteilhaft, wenn Spannungspulse als inkrementelle Adressierpulse verwendet werden, die wie bereits beschrieben als Niedrig-Spannungspulse innerhalb einer während eines Messzyklus' an dem Bus anliegenden höheren Spannung ausgebildet sein können. In der entgegengesetzten Kommunikationsrichtung kann der Bus dann vorzugsweise kurze Strompulse verwenden.

In einer bevorzugten Ausgestaltung des vorgeschlagenen Verfahrens kann die Messzentrale ein Sensorinterface und/oder angeschlossene Sensoren bspw. üben den Bus mit Spannung versorgen, wobei die Spannung abgeschaltet werden kann. Auf diese Weise kann die Versorgungsspannung der an den Bus angeschlossenen Komponenten außerhalb der eigentlichen Messzeiten abgeschaltet werden. Abgesehen von der damit verbundenen Energieeinsparung wird durch das Anlegen der Versorgungsspannung das gesamte Messsystem zu Beginn einer Messung in einen definierten Anfangszustand versetzt. Das Ausschalten der Versorgungsspannung auf dem Bus hat auch die Wirkung eines Reset für die angeschlossenen Geräte, die durch das Anlegen der Versorgungsspannung bei Beginn einer Messung jeweils neu initialisiert werden.

Eine einfache Kommunikationssteuerung lässt sich erfindungsgemäß in dem Bus des Verbrauchswerterfassungssystems dadurch erreichen, dass ein adressiertes Sensorinterface der Messzentrale die Adressierung durch eine Anzahlvon Pulsen quittiert, welche der Adresse des Sensorinterfaces entspricht. Auf diese Weise kann das Adresssystem einfach durch die Messzentrale überwacht und zur Steuerung für die Aussendung der Adressierpulse verwendet werden. Dies wurde bereits ausführlich erläutert. Für die Übertragung der Quittierung kann einfacher Weise vorgesehen werden, dass die Quittierpulse im Anschluss an die Daten zur Übermittlung der Messwerte übertragen werden.

Dabei ist es erfindungsgemäß besonders vorteilhaft, wenn das Sensorinterface mit einer Reaktion auf eine Adressierung länger wartet als eine vorgegebene minimale Pulsdauer zwischen zwei Adressierpulsen. Dadurch ist es möglich, seitens der Messzentrale durch eine schnelle Aussendung zweier oder mehrerer Adressierpulse innerhalb der minimalen Pulsdauer ein oder mehrere Sensorinterfaces in der Adressierung gezielt auszulassen, ohne das technisch besonders einfach umsetzbare Konzept der inkrementellen Adressierung aufzugeben.

Insbesondere wenn an ein Sensorinterface mehrere Sensoren angeschlossen sind, können einem Sensorinterface mehrere Pulsfolgen zur Adressierung zugeordnet werden, mit denen gezielt einer der an das Sensorinterface angeschlossenen Sensoren ansprechbar ist.

Gemäß einer bestimmten Ausführungsform des erfindungsgemäßen Verfahrens können in dem Sensorinterface und/oder einer an das Sensorinterface angeschlossenen Sensorschaltung Abgleichwerte angeschlossener Sensoren hinterlegt sein und verwendet werden, um aus den Messdaten der Sensoren an die Messzentrale übertragene Informationen zu erzeugen oder die Messdaten zusammen mit Abgleichwerten an die Messzentrale zu übertragen. Ferner können die Abgleichwerte nach einem einmaligen Abfragen und/oder bei der Installation unmittelbar in der Messzentrale abgespeichert werden. In jedem Fall ist die Durchführung des Verfahrens besonders einfach, weil lediglich der angeschlossene Sensor mit Spannung beaufschlagt werden muss und die zugehörigen Abgleichwerte in dem Sensorinterface, einer Sensorschaltung und/oder der Messzentrale vorliegen.

Zur Erkennung von Manipulationen kann erfindungsgemäß ferner vorgesehen werden, dass ein Widerstandssensor lange und mit einem starken Strom durchflossen wird und Änderungen seines Widerstandes aufgrund der damit einhergehenden Erwärmung des Widerstands erfasst werden. Auf diese Weise können Manipulationen erkannt werden, bei denen ein Sensor bspw. durch einen nicht temperaturabhängigen Festwiderstand ausgetauscht wird, weil in diesem Fall die erwartete Widerstandsänderung nicht eintritt. Ebenso kann erfasst werden, dass sich der Widerstandswert des Sensors zu stark ändert, was darauf schließen lässt, dass der Sensor nicht mehr an einer thermisch trägen Masse, bspw. dem Heizkörper, montiert ist. Eine derartige Funktionalität kann bspw. im Rahmen eines Sondermodus erreicht werden, in dem die Messzentrale den Auftrag zu einer Messung zur Manipulationserkennung gibt, die dann von den jeweiligen Sensorinterfaces ausgeführt wird.

Weitere Merkmale, Vorteile und Anwendungsmöglichkeiten der Erfindung ergeben sich auch aus der nachfolgenden Beschreibung eines Ausführungsbeispiels und der Zeichnung.

Es zeigen:
- Fig. 1: ein erfindungsgemäßes Verbrauchswerterfassungssystem mit einer Messzentrale, mehreren Sensorinterfaces und daran angeschlossenen Sensoren;
- Fig. 2: ein erfindungsgemäßes Sensorinterface gemäß Fig. 1 und
- Fig. 3: die Messzentrale des Verbrauchswerterfassungssystems gemäß Fig. 1.

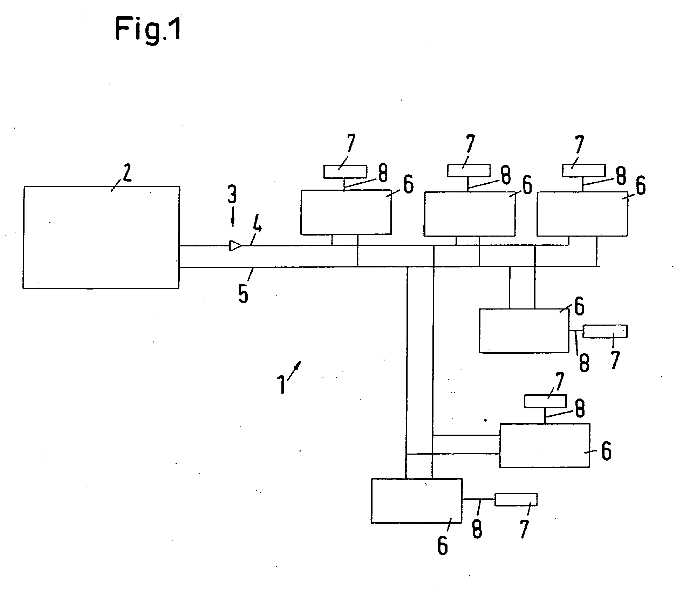

Das in Fig. 1 dargestellte Verbrauchswerterfassungssystem 1 weist eine Messzentrale 2 auf, an die über einen Bus 3 bildende Leitungen 4, 5 mehrere Sensorinterfaces 6 parallel angeschlossen sind. An jedem Sensorinterface 6 ist als Sensor 7 ein Widerstandssensor angeordnet, der einen temperaturabhängigen Widerstand aufweist und daher als Temperatursensor dient. Dazu ist jeweils ein Leitungspaar 8 vorgesehen, welches ein Sensorinterface 6 und den Widerstandssensor 7 miteinander verbindet, so dass der Widerstandssensor 7 ausgehend von dem Sensorinterface 6 mit einem Messstrom durchflossen werden kann. Weder die Sensorinterfaces 6 noch die Widerstandssensoren 7 sind dabei mit einer eigenen Energieversorgung versehen. Vielmehr werden die Sensorinterfaces 6 von der Messzentrale 2 über die Leitungen 4, 5 mit einer geeigneten Spannung, insbesondere einer Gleichspannung, versorgt. Gleichzeitig werden die Leitungen 4, 5 als Bussystem 3 genutzt, über das in Form von Spannungs- bzw. Strompulsen Informationen von der Messzentrale 2 zu dem Sensorinterface 6 oder umgekehrt gesendet werden können.

Der Bus 3 ist ein paralleler Datenbus mit zwei Leitungen, an die jeweils parallel alle Sensorinterfaces 6 angeschlossen sind. Erfindungsgemäß kann der Bus 3 natürlich auch mit mehr Leitungen realisiert werden.

Um eine Messung zu starten, legt die Messzentrale 2 eine Spannung an den sonst spannungslosen, parallelen Bus 3 an. Damit fangen alle Sensorinterfaces 6 definiert an zu arbeiten. Dazu liest jedes Sensorinterface 6 als erstes seine eigene Adresse aus einer in Fig. 1 nicht dargestellten, spannungsversorgungsfreien Abspeichereinheit.

Nach einer vorgegebenen Wartezeit sendet die Messzentrale 2 Adressierpulse in Form von Spannungspulsen auf den Bus 3. Grundsätzlich können diese als positive oder negative Spannungspulse ausgebildet sein. Da während des Messbetriebs jedoch ohnehin eine Spannung an dem Bus 3 anliegt, können die Spannungspulse auch als Niedrig-Spannungspulse ausgebildet sein, welche die dauernd anliegende Versorgungsspannung kurzzeitig unterbrechen und vermindern. Alle an den Bus 3 angeschlossenen Sensorinterfaces 6 zählen die Adressierimpulse. Wenn die Anzahl der Pulse der eigenen Adresse entspricht, beginnt das Sensorinterface 6 mit einer Messung der angeschlossenen Widerstandssensoren 7, wobei auch mehr als ein Widerstandssensor an ein Sensorinterface angeschlossen sein kann. Das Messergebnis wird durch das Sensorinterface 6 in einem Analog-Digital-Wandler in einen digitalen Zahlenwert konvertiert und dieser mittels Strompulsen an die Messzentrale 2 zurückgesendet.

Das Protokoll des Bussystems arbeitet mit inkrementellen Adressierpulsen, d.h. sobald die Zahl der seit dem Start des Bussystems nach einem Reset (spannungslose Zeit) gezählten Adressierpulse einer in dem Sensorinterface 6 gespeicherten Adresse entspricht, wird dieses Sensorinterfache 6 aktiv und führt die dieser Adresse zugeordnete Aufgabe durch. Nach einer Rückmeldung an die Messzentrale 2 erzeugt letztere einen weiteren Adressierpuls zum Ansprechen eines weiteren Sensorinterfaces 6 bzw. einer anderen Funktion innerhalb desselben Sensorinterfaces 6. Dadurch kann durch die Messzentrale 2 ein weiteres Sensorinterface 6, insbesondere das mit der nachfolgenden Adresse, zur Durchführung einer Messung mit dem angeschlossenen Widerstandssensor 7 ansprechen. Durch ein schnelles Aussenden zweier aufeinander folgender Adressierpulse ist es ferner möglich, einzelne Adressen auszulassen und auf diese Weise bestimmte Sensorinterfaces 6 gezielt zu übergehen bzw. anzusprechen.

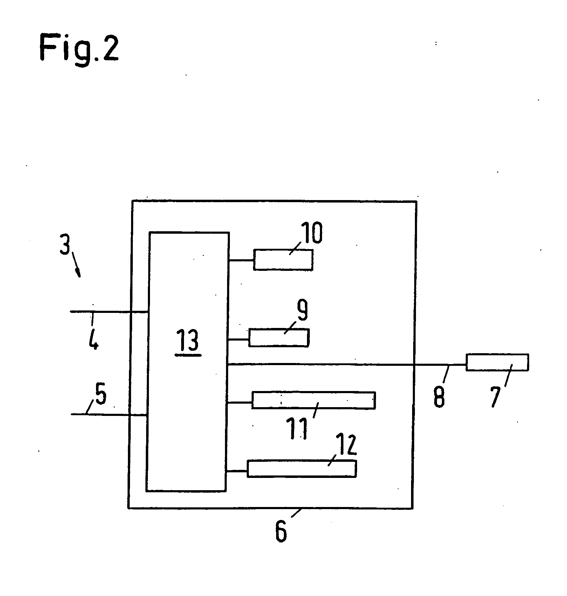

In Fig. 2 ist ein an den Datenbus 3 mit den Leitungen 4, 5 angeschlossenes Sensorinterface 6 näher dargestellt. An das Sensorinterface 6 ist extern mit einem Leitungspaar 8 der Widerstandssensor 7 angeschlossen, der bspw. die Temperatur eines Heizkörpers erfasst.

In dem Sensorinterface 6 ist ein weiterer integrierter Sensor 9 vorgesehen, welcher bspw. die Umgebungstemperatur misst. Ferner ist ein Referenzsensor 10 vorgesehen, der einen festen Widerstandswert vorgibt und für bspw. Testzwecke verwendbar ist. Ferner sind in dem Sensorinterface eine spannungsversorgungsfreie Abspeichereinheit 11 für Abgleichwerte der Sensoren 7, 9 sowie eine Abspeichereinheit 12 zum Abspeichern der Adresse vorgesehen. Der Widerstandssensor 7, der integrierte Sensor 9, der Referenzsensor 10 sowie die Abspeichereinheiten 11, 12 sind an eine gemeinsame Steuerung 13 des Sensorinterfaces 6 angeschlossen, welche mit dem Bus 3 in Verbindung steht und als einfacher Mikrocontroller ausgebildet ist.

Das Ablegen von Sensor-Abgleichwerten in der spannungsversorgungsfreien Abspeichereinheit 11 des Sensorinterfaces 6 vereinfacht die Interpretation der durch die Steuerung 13 ermittelten Messergebnisse der Sensoren 7, 9, so dass die Steuerung 13 grundsätzlich mit den Abgleichwerten korrigierte Messergebnisse über den Bus 3 zu der Messzentrale 2 senden könnte. Es ist verfahrenstechnisch jedoch vorteilhaft, die Abgleichwerte einmal aus dem Sensorinterface 6 auszulesen und in der Messzentrale zu speichern. In diesem Fall kann der Mikrocontroller in dem Sensorinterface 6 noch einfacher ausgebildet sein, weil keine Umrechnung des Messwertes durchgeführt wird. Später werden dann die Messrohdaten von dem Sensorinterface 6 zu der Messzentrale 2 gesendet und erst dort unter Verwendung der Abgleichwerte umgerechnet.

Da das Sensorinterface 6 keine dauernde Spannungsversorgung aufweist, ist für die Abspeichereinheit 12 eine Reihenschaltung von Widerständen vorgesehen, welche bspw. die Werte R0, 2R0, 4R0, 8R0 usw. haben. Jeder einzelne Widerstand ist zuerst durch eine dünne Brücke auf einem Schaltungslayout überbrückt. In der Fertigung werden nun die Sensoren inklusive der Analog-Digital-Wandler, welche mit in die Steuerung 13 integriert sein können, vermessen. Als Ergebnis erhält man einen digitalen Abgleichwert, dessen Wortbreite mit der Anzahl der Widerstände übereinstimmt. Mit dem Durchtrennen der einzelnen Brücken, welche bspw. durch Stromstöße oder mittels mechanischer Werkzeuge ausgeführt werden kann, ist der digitale Abgleichwert in dem Sensorinterface 6 unverlierbar abgelegt. Um den digitalen Abgleichwert einzulesen, wird der Gesamtwiderstand der Abspeichereinheit 11 durch die Steuerung 13 bestimmt. Dieser Gesamtwiderstand entspricht der resultierenden Widerstandskette. Je nach Anzahl der Widerstände kann dies in einem sehr groben Raster erfolgen.

Auch die digitale Adresse eines Sensorinterfaces 6 kann in der Abspeichereinheit 12 durch eine Reihe von Widerständen eingestellt werden. Um eine Einstellung der Adressen auch besonders einfach bei der Montage durchführen zu können, ist es möglich, die Widerstandsbrücken statt eines Durchtrennens mittels Stromstößen durch Abbrechen von Platinensegmenten an Sollbruchstellen zu unterbrechen. Ebenso wäre es möglich, die digitale Adresse mittels Codierschaltern als paralleles Wort an der Steuerung 13 des Sensorinterfaces zu hinterlegen. In diesem Fall wäre die Abspeichereinheit 12 in Form eines herkömmlichen Codierschalters ausgebildet. Sowohl über eine Widerstandskette als auch mittels Codierschalter sind die eingestellten Adressen der Sensorinterfaces 6 für den Installateur bei der Montage gut ablesbar, so dass es für den Monteur einfach ist, alle in dem Verbrauchswerterfassungssystem 1 vorhandenen Sensorinterfaces 6 mit unterschiedlichen Adressen auszustatten.

Nach Durchführung einer Messung sendet das Sensorinterface 6 die digitalisierten Messwerte der Sensoren 7, 9 oder sonstige angeforderte Informationen, bspw. den Wert des Referenzsensors 10 oder die Abgleichwerte aus der Abspeichereinheit 11, über den Bus 3 an die Messzentrale 2. Dazu erzeugt die Steuerung 13 entsprechende Strompulse, welche durch die Messzentrale 2 erkannt werden.

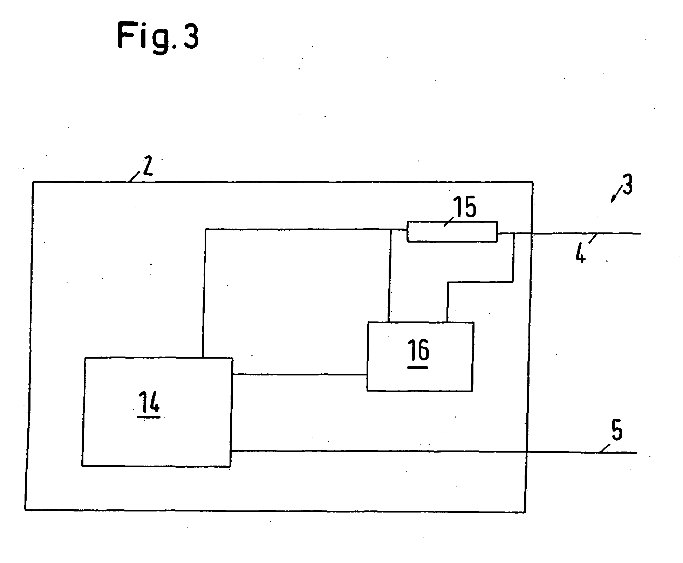

Diese weist dazu, wie in Fig. 3 dargestellt, einen Mikroprozessor 14 auf, an den die Leitungen 4, 5 des Busses 3 angeschlossen sind. In der Leitung 4 ist in der Messzentrale 2 ein sogenannter Shunt-Widerstand 15 vorgesehen, an dem der Strom der von dem Sensorinterface 6 erzeugten Strompulse einen Spannungsabfall erzeugt. Dieser wird gemessen und über einen Analog-Digital-Wandler 16 digitalisiert dem Mikroprozessor 14 zur Verfügung gestellt. Auf diese Weise kann der Mikroprozessor 14 einfach die Strompulse der Sensorinterfaces 6 erkennen und interpretieren. Nachdem die Messzentrale 2 die Messdaten des von ihm angesprochenen Sensorinterfaces 6 erhalten hat, wird von der Messzentrale 2 der nächste Adressierpuls ausgegeben und so das nächste Sensorinterface 6 adressiert.

Zum Auslesen der Abgleichwerte aus den Abspeichereinheiten 11 der Sensorinterfaces 6 kann ein Sondermodus eingeführt werden, bei dem bspw. eine über eine bekannte maximale Anzahl von Sensorinterfaces 6 hinausgehende Anzahl von Adressierpulsen ausgegeben wird. In diesem Fall wäre den Abgleichwerten ein eigener Adressbereich zugeordnet, so dass ein Sensorinterface 6 bei Empfang eines solchen Adressierpulses veranlasst wird, die Werte der Abspeichereinheit 11, ggf. zusammen mit den in der Abspeichereinheit 12 angegebenen Adressdaten, zurückzusenden. Ggf. ist es auch möglich, durch einen Puls besonderer Länge oder Form, bspw. einen Doppelpuls oder ähnliches, ganz am Anfang eines jeden Messzyklus nach Anlegen der Spannung an den Bus 3 alle Sensorinterfaces 6 zum Einlesen und Ausgeben der Abgleichwerte und/oder Adressdaten aus den Abspeichereinheiten 11, 12 zu veranlassen.

Bei Auftreten von Störpulsen in dem Bus 3 könnten die Sensorinterfaces 6 die Störpulse als Adressierpulse fehlinterpretieren. Um solche Fehladressierungen innerhalb des Busses 3 zu erkennen, sendet ein adressiertes Sensorinterface 6 der Messzentrale 2 als Quittierungssignal seine eigene Adresse zurück, welche vorzugsweise in ein Kommunikationstelegramm eingebettet ist, in dem auch die Messwerte übertragen werden. Wenn ein Messzyklus gestört worden ist und die Messzentrale 2 dieses anhand einer unerwarteten Adressrückmeldung erkennt, kann der Mikroprozessor 14 der Messzentrale 2 die Messung abbrechen und den Messzyklus neu starten und ggf. durch schnell aufeinander folgende Adressierpulse an einer definierten Stelle neu aufsetzen. Dies ist möglich, wenn ein Sensorinterface 6 vor einer Reaktion auf einen Adressierpuls eine Mindestzeit (minimale Pulsdauer zwischen zwei Addressierpulsen) abwartet, um der Messzentrale 2 die Möglichkeit zu geben, vor der Rücksendung des Messwertes einen neuen Adressierpuls auszusenden und damit dieses Sensorinterface 6 bei der Messung zu überspringen.

Durch das erfindungsgemäße Verbrauchswerterfassungssystem 1 kann mit elektronisch geringem Aufwand und kostengünstigen Bauteilen ein Erfassungs-und Ablesesystem installiert werden, das sehr genau und quasi wartungsfrei ist, da die Sensorinterfaces 6 und die angeschlossenen Sensoren 7, 9, 10 nicht ständig mit Spannung versorgt werden müssen und ein Batterieaustausch unnötig ist. Ferner ergibt sich ein hoher Ablesekomfort, weil die mit einer eigenen Spannungsversorgung ausgestattete Messzentrale 2 eine zentrale Datenspeicherung, Datenweitergabe zur Fernablesung, ein Zeit-Management, ein Bus-Management mit der Initiierung von Messungen, der Durchführung von Berechnungen, eine Konfigurierung des Systems mittels einer Tastatur und einer Anzeige vorsehen kann. Die Messzentrale 2 kann dabei derart außerhalb der Wohnungen einer Liegenschaft angeordnet sein, so dass es für die Ablesung nicht notwendig ist, die einzelnen Wohnungen zu betreten.

Der besondere Vorteil des Systems liegt darin, dass die Sensorinterfaces im Vergleich zu herkömmlichen Verbrauchserfassungsgeräten keine Batterie und Anzeige mehr benötigen und aufgrund des einfach gestalteten Busprotokolls mit sehr einfachen und kostengünstigen Mikrocontrollern bzw. -prozessoren ausgestattet werden können.

### Bezugszeichenliste:

- 1: Verbrauchswerterfassungssystem
- 2: Messzentrale
- 3: Bus
- 4: Leitung
- 5: Leitung
- 6: Sensorinterface
- 7: Widerstandssensor
- 8: Leitungspaar
- 9: integrierter Sensor
- 10: Referenzsensor
- 11: Abspeichereinheit
- 12: Abspeichereinheit
- 13: Steuerung
- 14: Mikroprozessor
- 15: Shunt-Widerstand
- 16: Analog-Digital-Wandler

## Patentansprüche

1. Verbrauchswerterfassungssystem mit mehreren Sensoren (7, 9, 10) und einer Messzentrale (2), welche über Leitungen (4, 5) miteinander verbunden sind, wobei zwischen der Messzentrale (2) und einem Sensor (7, 9, 10) ein Sensorinterface (6) zwischengeschaltet ist, welches mindestens einen Sensor (7, 9, 10) ansteuert, wobei die Leitungen (4, 5) zwischen der Messzentrale (2) und einem Sensorinterface (6) einen Bus (3) bilden, wobei in dem Sensorinterface (6) eine spannungsversorgungsfreie Abspeichereinheit (12) zur Speicherung einer digitalen Adresse vorgesehen ist und wobei der Bus (3) Adressierpulse zum Ansprechen eines Sensorinterface (6) von der Messzentrale (2) und Pulse zum Senden digitaler Informationen von einem Sensorinterface (6) an die Messzentrale (2) aufweist und eine Spannungsversorgung für das Sensorinterface (6) und daran angeschlossene Sensoren (7, 9, 10) vorsieht, **dadurch gekennzeichnet, dass** die Adressierpulse des Busses (3) inkrementell aufgebaut sind und die Abspeichereinheit (12) mehrere, einzeln aktivierbare Widerstände aufweist, indem die Widerstände überbrückt sind und jede Überbrückung einzeln trennbar ist.

2. Verbrauchswerterfassungssystem nach Anspruch 1, **dadurch gekennzeichnet, dass** die inkrementellen Adressierpulse Niedrig-Spannungspulse in einer an dem Bus anliegenden hohen Spannung sind.

3. Verbrauchswerterfassungssystem nach einem der vorhergehenden Ansprüche, **dadurch gekennzeichnet, dass** das Sensorinterface (6) eine Steuerung (13) zur Durchführung einer Messung mit einem angesprochenen Sensor (7, 9, 10) aufweist.

4. Verbrauchswerterfassungssystem nach einem der vorhergehenden Ansprüche, **dadurch gekennzeichnet, dass** in dem Sensorinterface (6) und/oder dem Sensor (7, 9, 10) eine spannungsversorgungsfreie Abspeichereinheit (11) zur Speicherung von Abgleichwerten für die Sensoren (7, 9, 10) vorgesehen ist.

5. Verbrauchswerterfassungssystem nach Anspruch 4, **dadurch gekennzeichnet, dass** die Abspeichereinheit (11) mehrere, einzeln aktivierbare Bauteile aufweist.

6. Verbrauchswerterfassungssystem nach einem der vorhergehenden Ansprüche, **dadurch gekennzeichnet, dass** ein Sensor (9, 10) mit in das Sensorinterface (6) integriert ist.

7. Verbrauchswerterfassungssystem nach einem der vorhergehenden Ansprüche, **dadurch gekennzeichnet, dass** mehrere Sensorinterfaces (6) und/oder mehrere Sensoren (7, 9, 10) vorgesehen sind.

8. Verfahren zum Betreiben eines Verbrauchswerterfassungssystems (1) mit mehreren Sensoren (7, 9, 10), einer Messzentrale (2) und mindestens einem Sensorinterface (6), welche über einen Bus (3) bildende Leitungen (4, 5) miteinander verbunden sind, wobei das Sensorinterface (6) Informationen in digitaler Form über den Bus (3) mittels Pulsen zu der Messzentrale (2) übermittelt und eine spannungsversorgungsfreie Abspeichereinheit (12) zur Speicherung einer digitalen Adresse aufweist, **dadurch gekennzeichnet, dass** die Messzentrale (2) das Sensorinterface (6) über den Bus (3) mittels inkrementeller Adressierpulse adressiert und dass die Adresse des Sensorinterfaces (6) und/oder einzelner Kanäle des Sensorinterfaces (6) in der spannungsversorgungsfreien Abspeichereinheit (12) eingestellt werden, indem einzelne Überbrückungen von in der Abspeichereinheit (12) vorgesehenen Widerständen aufgetrennt und über einen detektierbaren Spannungsabfall so digitale Werte vorgegeben werden.

9. Verfahren nach Anspruch 8, **dadurch gekennzeichnet, dass** Spannungspulse als inkrementelle Adressierpulse verwendet werden.

10. Verfahren nach Anspruch 8 oder 9, **dadurch gekennzeichnet, dass** Strompulse als Pulse von einem Sensorinterface (6) zu der Messzentrale (2) verwendet werden.

11. Verfahren nach einem der Ansprüche 8 bis 10, **dadurch gekennzeichnet, dass** ein adressiertes Sensorinterface (6) der Messzentrale (2) die Adressierung durch eine Anzahl von Pulsen quittiert, welche der Adresse des Sensorinterfaces (6) entspricht.

12. Verfahren nach einem der Ansprüche 8 bis 11, **dadurch gekennzeichnet, dass** das Sensorinterface (6) mit einer Reaktion auf eine Adressierung länger wartet als eine vorgegebene Pulsdauer zwischen den Adressierpulsen.

13. Verfahren nach einem der Anspruch 8 bis 12, **dadurch gekennzeichnet, dass** einem Sensorinterface (6) mehrere Adressierpulse zugeordnet werden.

14. Verfahren nach einem der Ansprüche 8 bis 13, **dadurch gekennzeichnet, dass** Abgleichwerte für Sensoren (7, 9, 10) in einem Sensorinterface (6) und/oder in einer an das Sensorinterface (6) angeschlossenen Sensorschaltung hinterlegt sind.

15. Verfahren nach einem der Ansprüche 8 bis 14, **dadurch gekennzeichnet, dass** ein Widerstandssensor (7, 9, 10) zur Erkennung von Manipulationen lange und mit einem starken Strom durchflossen wird und eine Änderung seines Widerstands erfasst wird.

## Claims

1. A consumption value detection system with a plurality of sensors (7, 9, 10) and a measurement control centre (2), which are connected with one another via lines (4, 5), wherein a sensor interface (6) is interposed between the measurement control centre (2) and a sensor (7, 9, 10), which controls at least one sensor (7, 9, 10), wherein the lines (4, 5) between the measurement control centre (2) and a sensor interface (6) form a bus (3), wherein in the sensor interface (6) a power supply-independent storage unit (12) is provided for the storage of a digital address, and wherein the bus (3) has address pulses for activating a sensor interface (6) from the measurement control centre (2) and pulses for transmitting digital information from a sensor interface (6) to the measurement control centre (2), and provides a power supply for the sensor interface (6) and sensors (7, 9, 10) that are connected to it, **characterised in that** the address pulses of the bus (3) are constructed incrementally and the storage unit (12) has a plurality of resistances that can be individually activated, **in that** the resistances are bridged and each bridge can individually be disconnected.

2. The consumption value detection system according to Claim 1, **characterised in that** the incremental address pulses are low voltage pulses in a high voltage that is present on the bus.

3. The consumption value detection system according to one of the preceding claims, **characterised in that** the sensor interface (6) has a controller (13) for executing a measurement with an activated sensor (7, 9, 10).

4. The consumption value detection system according to one of the preceding claims, **characterised in that** a power supply-independent storage unit (11) is provided in the sensor interface (6) and/or the sensor (7, 9, 10) for the storage of adjusted values for the sensors (7, 9, 10).

5. The consumption value detection system according to Claim 4, **characterised in that** the storage unit (11) has a plurality of components that can be individually activated.

6. The consumption value detection system according to one of the preceding claims, **characterised in that** a sensor (9, 10) is integrated into the sensor interface (6).

7. The consumption value detection system according to one of the preceding claims, **characterized in that** a plurality of sensor interfaces (6) and/or a plurality of sensors (7, 9, 10) are provided.

8. A method for the operation of a consumption value detection system (1) with a plurality of sensors (7, 9, 10), a measurement control centre (2), and at least one sensor interface (6), which are connected with one another via lines (4, 5) forming a bus (3), wherein the sensor interface (6) transmits information by means of pulses in digital form via the bus (3) to the measurement control centre (2), and has a power supply-independent storage unit (12) for the storage of a digital address, **characterised in that** the measurement control centre (2) addresses the sensor interface (6) via the bus (3) by means of incremental address pulses, and **in that** the address of the sensor interface (6) and/or of individual channels of the sensor interface (6) are adjusted in the power supply-independent storage unit (12), **in that** individual bridges of resistances provided in the storage unit (12) are disconnected, and thus digital values are specified via a detectable voltage drop.

9. The method according to Claim 8, **characterised in that** voltage pulses are used as incremental address pulses.

10. The method according to Claim 8 or 9, **characterised in that** current pulses are used as pulses from a sensor interface (6) to the measurement control centre (2).

11. The method according to one of the Claims 8 to 10, **characterised in that** an addressed sensor interface (6) of the measurement control centre (2) acknowledges the addressing by means of a number of pulses that corresponds to the address of the sensor interface (6).

12. The method according to one of the Claims 8 to 11, **characterised in that** the sensor interface (6) waits longer when reacting to an addressing than a prescribed pulse duration between the address pulses.

13. The method according to one of the Claims 8 to 12, **characterised in that** a plurality of address pulses are assigned to a sensor interface (6).

14. The method according to one of the Claims 8 to 13, **characterised in that** adjusted values for sensors (7, 9, 10) are deposited in a sensor interface (6) and/or in a sensor circuit connected to the sensor interface (6).

15. The method according to one of the Claims 8 to 14, **characterised in that** for purposes of recognition of manipulations a high current flows through a resistance sensor (7, 9, 10) for a long time, and a modification of the sensor's resistance is recorded.

## Revendications

1. Système d'acquisition de valeur de consommation comprenant plusieurs capteurs (7, 9, 10) et une centrale de mesure (2), qui sont reliés les uns aux autres par des conduites (4, 5), une interface de capteur (6) étant intercalée entre la centrale de mesure (2) et un capteur (7, 9, 10), laquelle interface actionne au moins un capteur (7, 9, 10), les conduites (4, 5) entre la centrale de mesure (2) et une interface de capteur (6) formant un bus (3), une unité de stockage (12) dépourvue d'alimentation en tension étant prévue dans l'interface de capteur (6) pour le stockage d'une adresse numérique et le bus (3) présentant des impulsions d'adressage pour le déclenchement d'une interface de capteur (6) à partir de la centrale de mesure (2) et des impulsions pour envoyer des informations numériques d'une interface de capteur (6) à la centrale de mesure (2) et prévoyant une alimentation en tension pour l'interface de capteur (6) et des capteurs (7, 9, 10) raccordés à cette interface, **caractérisé en ce que** les impulsions d'adressage du bus (3) sont structurées de façon incrémentielle et l'unité de stockage (12) présente plusieurs résistances activables individuellement du fait que les résistances sont shuntées et chaque shuntage est séparable individuellement.

2. Système d'acquisition de valeur de consommation selon la revendication 1, **caractérisé en ce que** les impulsions d'adressage incrémentielles sont des impulsions de basse tension dans une tension élevée s'appliquant sur le bus.

3. Système d'acquisition de valeur de consommation selon l'une quelconque des revendications précédentes,
**caractérisé en ce que** l'interface de capteur (6) présente une commande (13) pour l'exécution d'une mesure avec un capteur (7, 9, 10) déclenché.

4. Système d'acquisition de valeur de consommation selon l'une quelconque des revendications précédentes, **caractérisé en ce qu'**une unité de stockage (11) dépourvue d'alimentation en tension est prévue dans l'interface de capteur (6) et/ou le capteur (7, 9, 10) pour le stockage de valeurs d'ajustage pour les capteurs (7, 9, 10).

5. Système d'acquisition de valeur de consommation selon la revendication 4, **caractérisé en ce que** l'unité de stockage (11) présente plusieurs composants activables individuellement.

6. Système d'acquisition de valeur de consommation selon l'une quelconque des revendications précédentes, **caractérisé en ce qu'**un capteur (9, 10) est intégré dans l'interface de capteur (6).

7. Système d'acquisition de valeur de consommation selon l'une quelconque des revendications précédentes, **caractérisé en ce que** plusieurs interfaces de capteur (6) et/ou plusieurs capteurs (7, 9, 10) sont prévus.

8. Procédé pour l'utilisation d'un système d'acquisition de valeur de consommation (1) comprenant plusieurs capteurs (7, 9, 10), une centrale de mesure (2) et au moins une interface de capteur (6), lesquels sont reliés les uns aux autres par des lignes (4, 5) formant un bus (3), l'interface de capteur (6) transmettant des informations sous forme numérique via le bus (3) au moyen d'impulsions à la centrale de mesure (2) et présentant une unité de stockage (12) dépourvue d'alimentation en tension pour le stockage d'une adresse numérique, **caractérisé en ce que** la centrale de mesure (2) adresse l'interface de capteur (6) via le bus (3) au moyen d'impulsions d'adressage incrémentielles et **en ce que** l'adresse de l'interface de capteur (6) et/ou des canaux individuels de l'interface de capteur (6) sont réglés dans l'unité de stockage (12) dépourvue d'alimentation en tension du fait que des shuntages individuels de résistances prévues dans l'unité de stockage (12) sont séparés et des valeurs numériques sont ainsi prédéfinies par une chute de tension détectable.

9. Procédé selon la revendication 8, **caractérisé en ce que** des impulsions de tension sont utilisées comme impulsions d'adressage incrémentielles.

10. Procédé selon la revendication 8 ou 9, **caractérisé en ce que** des impulsions de courant sont utilisées comme impulsions entre l'interface de capteur (6) et la centrale de mesure (2).

11. Procédé selon l'une quelconque des revendications 8 à 10, **caractérisé en ce qu'**une interface de capteur (6) adressée de la centrale de mesure (2) acquitte l'adressage par un nombre d'impulsions qui correspond à l'adresse de l'interface de capteur (6).

12. Procédé selon l'une quelconque des revendications 8 à 11, **caractérisé en ce que** l'interface de capteur (6) attend une réaction à un adressage plus longtemps qu'une durée d'impulsion prédéfinie entre les impulsions d'adressage.

13. Procédé selon l'une quelconque des revendications 8 à 12, **caractérisé en ce que** plusieurs impulsions d'adressage sont attribuées à une interface de capteur (6).

14. Procédé selon l'une quelconque des revendications 8 à 13, **caractérisé en ce que** des valeurs d'ajustage pour des capteurs (7, 9, 10) sont déposées dans une interface de capteur (6) et/ou dans un circuit de capteur raccordé à l'interface de capteur (6).

15. Procédé selon l'une quelconque des revendications 8 à 14, **caractérisé en ce qu'**un capteur de résistance (7, 9, 10) est traversé longtemps et avec un courant intense pour la détection de manipulations et une modification de sa résistance est enregistrée.
